# EUROPEAN PATENT SPECIFICATION

(11) **EP 4 317 277 B1**
(45) Date of publication and mention of the grant of the patent: **03.12.2025**
(21) Application number: 22781016.5
(22) Date of filing: 29.03.2022
(51) Int. Cl.: C08J 9/26

(54) **COMPOSITE MATERIAL AND METHOD FOR MANUFACTURING COMPOSITE MATERIAL**
VERBUNDMATERIAL UND VERFAHREN ZUR HERSTELLUNG EINES VERBUNDMATERIALS
MATÉRIAU COMPOSITE ET PROCÉDÉ DE FABRICATION D'UN MATÉRIAU COMPOSITE

(30) Priority: 30.03.2021 JP 2021058841
(43) Date of publication of application: 07.02.2024
(73) Proprietor: NITTO DENKO CORPORATION, Ibaraki-shi Osaka 567-8680 (JP)
(72) Inventor: KATO, Tomoya, Ibaraki-shi, Osaka 567-8680 (JP); OTSUKA, Tetsuya, Ibaraki-shi, Osaka 567-8680 (JP)
(74) Representative: Hoffmann Eitle
(86) International application number: PCT/JP2022/015733
(87) International publication number: WO 2022/210805

(56) References cited:
- EP-A1- 3 342 809
- WO-A1-2021/201061
- JP-A- 2004 076 494
- JP-A- 2007 021 334
- JP-A- 2007 056 064
- JP-A- 2007 320 988
- JP-A- 2013 014 716
- JP-A- 2018 109 101

## Description

### TECHNICAL FIELD

The present invention relates to a composite material and a method for manufacturing a composite material.

### BACKGROUND ART

Efforts have been made to increase the heat conductivity of materials, such as foam materials, having a plurality of voids.

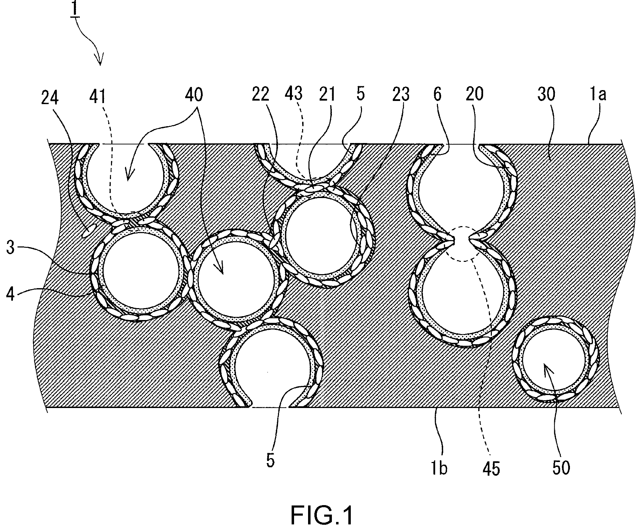

For example, Patent Literature 1 discloses a composite material including: scaly fillers formed of an inorganic material; and a binding resin formed of a thermosetting resin binding the fillers. This composite material is a foam material in which a plurality of voids are dispersed, and the fillers accumulate on inner walls of the voids such that flat surfaces of the fillers overlap each other (claim 1 and FIG. 1).

### CITATION LIST

### Patent Literature

Patent Literature 1: JP 2018-109101 A

### SUMMARY OF INVENTION

### Technical Problem

According to the technique described in Patent Literature 1, the fillers accumulate on the inner walls of the voids. For example, a physical impact such as vibration is likely to cause the fillers to become detached from the composite material according to this technique. This technique leaves room for reexamination from the viewpoint of providing a composite material which includes a plurality of voids and from which fillers are unlikely to become detached. The present invention therefore provides a new composite material which includes a plurality of voids and from which inorganic particles are unlikely to become detached.

### Solution to Problem

The present invention provides a composite material including:
a frame portion including a first resin;
a plurality of voids; and
a first layer and a second layer each placed along a periphery of each of the plurality of voids, wherein
the first layer includes a plurality of inorganic particles, and
the second layer includes at least one resin selected from the group consisting of the first resin and a second resin different from the first resin, covers the first layer from a farther side of the first layer, and faces the void, the farther side being farther from the frame portion.

In another aspect, the present invention provides a method for manufacturing a composite material including: a frame portion including a first resin; and a plurality of voids, the method including, in the following order:
charging a fluid in a gap in a particle aggregate including a plurality of resin particles, the fluid including the first resin or a precursor of the first resin, and
forming the plurality of voids by shrinking or removing the plurality of resin particles by heating the plurality of resin particles, wherein
a first layer and a second layer are present on each of surfaces of the plurality of resin particles,
the first layer and the second layer are placed such that the second layer is between the surface and the first layer and the surface and the second layer are in contact with each other,
the first layer includes a plurality of inorganic particles, and
the second layer includes at least one resin selected from the group consisting of the first resin and a second resin different from the first resin.

### Advantageous Effects of Invention

The present invention can provide a new composite material which includes a plurality of voids and from which inorganic particles are unlikely to become detached.

### BRIEF DESCRIPTION OF DRAWINGS

FIG. 1 is a cross-sectional view schematically showing an example of a composite material according to the present embodiment.
FIG. 2 is a cross-sectional view schematically showing another example of the composite material according to the present embodiment.
FIG. 3 illustrates a measurement position in the composite material according to the present embodiment measured by energy dispersive X-ray spectroscopy using an ultra-high-resolution field-emission scanning electron microscope.
FIG. 4 shows the result of scanning electron microscope observation of a cross-section of a composite material according to Example 1.

### DESCRIPTION OF EMBODIMENTS

Embodiments of the present invention will be described hereinafter with reference to the drawings. The following description describes examples of the present invention, and the present invention is not limited to the following embodiments.

As shown in FIG. 1, a composite material 1 according to the present embodiment includes a frame portion 30 and a plurality of voids 40. The frame portion 30 includes a first resin. The composite material 1 includes a first layer 3 and a second layer 4. The first layer 3 and the second layer 4 are each placed along a periphery of each of the plurality of voids 40. The first layer 3 includes a plurality of inorganic particles 20. The second layer 4 covers the first layer 3 from a farther side of the first layer 3 and faces the void 40, the farther side being farther from the frame portion 30. The second layer 4 includes at least one resin selected from the group consisting of the first resin and a second resin different from the first resin. The second layer 4 may include the second resin.

According to the technique described in Patent Literature 1, the plurality of inorganic particles are placed to face the void. In the case of this configuration, the inorganic particles is likely to become detached by a physical impact such as vibration. This is likely to decrease the heat conductivity performance of the composite material. On the other hand, according to the embodiment shown in FIG. 1, the first layer 3 including the inorganic particles 20 is covered by the second layer 4, and thus the inorganic particles 20 are unlikely to become detached from the composite material 1. Thus, the heat conductivity performance of the composite material 1 is unlikely to decrease.

Detachment of the inorganic particles 20 from the composite material 1 can be confirmed, for example, by the following method. After the composite material 1 is shaken using a device such as a shaker, detachment of the inorganic particles 20 from the composite material 1 is visually confirmed. Alternatively, detachment of the inorganic particles 20 from the composite material 1 can also be confirmed by shaking the composite material 1 and subjecting solids detached from the composite material 1 to element analysis. For example, a technique such as inductively coupled plasma (ICP) atomic emission spectroscopy, energy dispersive X-ray spectroscopy (EDX), X-ray photoelectron spectroscopy (ESCA), or the like is used for the element analysis.

Detachment of the inorganic particles 20 from the composite material 1 can also be confirmed, for example, by examining whether the inorganic particles 20 are eluted from the composite material 1. Elution of the inorganic particles 20 from the composite material 1 can be confirmed, for example, by the following method. After the composite material 1 is immersed in and then taken out of a solvent such as toluene, cloudiness of the solvent is visually confirmed. Alternatively, whether the inorganic particles 20 are eluted from the composite material 1 can also be examined by vaporizing a solvent after immersion of the composite material 1 therein and subjecting residual solids to element analysis. For example, a technique such as ICP, EDX, ESCA, or the like is used for the element analysis.

As shown in FIG. 1, the composite material 1 includes, for example, a porous structure having the plurality of voids 40. The composite material 1 includes, for example, heat transmission paths 5 and 6. The heat transmission paths 5 and 6 stretch in the first layer 3. The heat transmission paths 5 and 6 stretch, for example, through the plurality of voids 40. The heat transmission paths 5 and 6 are formed of the plurality of inorganic particles 20 arranged continuously, i.e., in contact with each other or close to each other. The heat transmission paths 5 and 6, for example, stretch not through the inside of the frame portion 30, more specifically, stretch along an inner surface of the frame portion 30. For example, some of the heat transmission paths 5 stretch from a surface 1a of the composite material 1 to a surface 1b on the opposite side thereof.

In the composite material 1, at least two of the voids 40 may be placed to be in contact with each other. In the composite material 1, at least two of the voids 40 may be placed such that the first layers 3 are connected to each other. For example, as shown in FIG. 1, at least two of the voids 40 are placed in the composite material 1 such that in a connecting portion 41, the first layers 3 along the peripheries of the voids 40 are connected and the second layers 4 are not connected.

It should be noted that all heat transmission paths not necessarily appear in a particular cross-section as shown in FIG. 1 and that a particular heat transmission path not necessarily appears entirely in a particular cross-section as shown in FIG. 1. For example, in FIG. 1, the heat transmission path 6 does not seem to stretch to the surface 1b. Actually, however, the heat transmission path 6 stretches via the inorganic particles not appearing in this cross-section and reaches the surface 1b. Similarly, it is impossible to confirm that every void is in contact with another void. For example, a void 50 seems to be isolated in FIG. 1. Actually, however, the void 50 is in contact with another void adjacent thereto in a thickness direction of the page.

However, not all heat transmission paths need to stretch from the surface 1a to the surface 1b. Moreover, not every void included in the porous structure needs to be in contact with another void directly or via the inorganic particle.

For example, the inorganic particles 20 are not present in the connecting portion 41. In the connecting portion 41, for example, the first layer 3 and the second layer 4 are provided. Therefore, the voids 40 directly in contact with each other in the connecting portion 41 do not communicate to each other.

For example, the inorganic particle 21 is present in a connecting portion 43. The first layer 3 and the second layer 4 are present also in the connecting portion 43. However, the voids 40 that seem to be adjacent to each other via the connecting portion 41 or 43 in FIG. 1 may be directly in contact with and communicate to each other in a cross-section different from the one in FIG. 1.

For example, a connecting portion 45 includes a portion where the inorganic particles 20, the first layer 3, and the second layer 4 are not present. The voids 40 in contact with each other in the connecting portion 45 form one space where the voids 40 communicate to each other through the connecting portion 45.

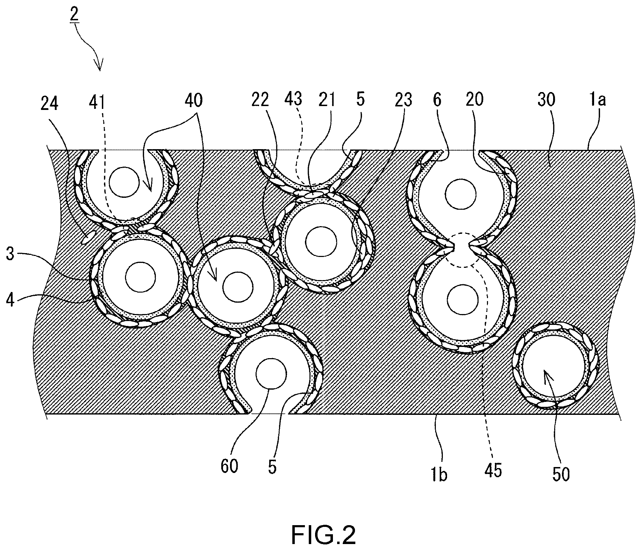

As shown in FIG. 2, a particle 60 may be present inside the void 40. The particle 60 is typically a resin particle. The particle 60 can be a resin particle shrunk by a heat treatment. The resin particle before shrinking may be in a shape corresponding to the void 40. The resin occupying the void may be removed as shown in FIG. 1, or may deform and remain in the void as shown in FIG. 2. In the latter case, the particle 60 may be in contact with the second layer 4. In a particular cross-section, presence of the particle 60 cannot be confirmed inside of the void 50; however, in another cross-section, presence of the particle 60 may be confirmed inside the same void 50. In the embodiment shown in FIG. 2, the particle 60 is present in at least some of the voids 40 and 50, the particle 60 being smaller than the at least some of the voids 40 and 50.

The material of the inorganic particle 20 is not limited to a particular material. The inorganic particle 20 has, for example, a higher heat conductivity than the heat conductivity of the resin 30. Examples of the material of the inorganic particle 20 include hexagonal boron nitride (h-BN), alumina, crystalline silica, amorphous silica, aluminum nitride, magnesium oxide, carbon fibers, silver, copper, aluminum, silicon carbide, graphite, zinc oxide, silicon nitride, silicon carbide, cubic boron nitride (c-BN), beryllia, diamond, carbon black, graphene, carbon nanotubes, carbon fibers, and aluminum hydroxide. The inorganic particles 20 in the composite material 1 may consist of one type of the inorganic particle 20 or a combination of two or more types of the inorganic particle 20. The shape of the inorganic particle 20 is not limited to a particular shape. Examples of the shape of the inorganic particle 20 include sphere-like, rod-like (including short-fiber), scaly, needle-like, and granular shapes. The "granular" shape refers to, for example, the shape of an aggregate of the plurality of inorganic particles 20 aggregated using a binder or the shape of a sintered body of the plurality of inorganic particles 20.

The aspect ratio of the inorganic particle 20 is not limited to a particular value. The aspect ratio of the inorganic particle 20 may be less than 50, 40 or less, or even 30 or less. The aspect ratio of the inorganic particle 20 may be 1, or may be a greater value, e.g., 2 or more or even 3 or more. The aspect ratio is defined as a ratio (maximum diameter/minimum diameter) of the maximum diameter of a particle to the minimum diameter of the particle, unless otherwise specified. Herein, the minimum diameter is defined as a shortest line segment passing through a midpoint of a line segment defined as the maximum diameter.

The average particle diameter of the inorganic particles 20 is not limited to a particular value. The average particle diameter of the inorganic particles 20 is, for example, 0.05 µm to 100 µm, and may be 0.1 µm to 50 µm, 0.1 µm to 30 µm, or 0.5 to 10 µm. The average particle diameter can be determined, for example, by laser diffraction-scattering. The average particle diameter is, for example, a 50% cumulative value (median diameter) d₅₀ determined from a particle size distribution curve, in which a frequency is represented by a volume-based fraction, obtained using a particle size distribution analyzer (Microtrac MT3300EXII) manufactured by MicrotracBEL Corp.

The shape of the inorganic particle 20 can be determined, for example, by observation using, for example, a scanning electron microscope (SEM). For example, the inorganic particle 20 is considered to have a sphere-like shape when the aspect ratio (maximum diameter/minimum diameter) thereof is 1.0 or more and less than 1.7, particularly 1.0 or more and 1.5 or less, or even 1.0 or more and 1.3 or less and at least a portion of an outline, particularly, substantially the entire outline, of the inorganic particle 20 observed is a curve.

The "scaly" shape refers to the shape of a plate having a pair of principal surfaces and a lateral face. The term "principal surface" of the inorganic particle 20 refers to a face thereof having the largest area, and is typically a substantially flat face. When the inorganic particle 20 has a scaly shape, the aspect ratio is defined as a ratio of an average dimension of the principal surfaces to the average thickness, instead of the above definition. The thickness of the scaly inorganic particle 20 refers to the distance between the pair of principal surfaces. The average thickness can be determined by measuring thicknesses of any fifty inorganic particles 20 using a SEM and calculating the average of the thicknesses. A value of d₅₀ measured using the above particle size distribution analyzer can be used as the average dimension of the principal surfaces. The aspect ratio of the scaly inorganic particle 20 may be 1.5 or more, 1.7 or more, or even 5 or more. Examples of the rod-like shape include stick-like shapes such as stick-like, columnar, tree-like, needle-like, and conical shapes. The aspect ratio of the rod-like inorganic particle 20 may be 1.5 or more, 1.7 or more, or even 5 or more. Examples of the upper limit of the aspect ratio are as described above regardless of the shape of the inorganic particle 20.

When the inorganic particles 20 have a sphere-like shape, the average particle diameter thereof is, for example, 0.1 µm to 50 µm, preferably 0.1 µm to 10 µm, and more preferably 0.5 µm to 5 µm. When the inorganic particles 20 have a scaly shape, the average dimension of the principal surfaces of the inorganic particles 20 is, for example, 0.1 µm to 20 µm and preferably 0.5 µm to 15 µm. When the inorganic particles 20 have a scaly shape, the average thickness of the inorganic particles 20 is, for example, 0.05 µm to 1 µm and preferably 0.08 µm to 0.5 µm. When the inorganic particle 20 has a rod-like shape, the minimum diameter (commonly the length of the minor axis) of the inorganic particle 20 is, for example, 0.01 µm to 10 µm and preferably 0.05 µm to 1 µm. When the inorganic particle 20 has a rod-like shape, the maximum diameter (commonly the length of the major axis) of the inorganic particle 20 is, for example, 0.1 µm to 20 µm and preferably 0.5 µm to 10 µm. When the size of the inorganic particle 20 is in these ranges, the inorganic particles 20 are likely to be placed along the void 40 and thus the heat transmission path 5 stretching through the plurality of voids 40 can be reliably formed. When the inorganic particles 20 have a granular shape, the average particle diameter thereof is, for example, 10 µm to 100 µm, and preferably 20 µm to 60 µm.

The amount of the inorganic particles 20 in the composite material 1 is not limited to a particular value. The amount of the inorganic particles 20 in the composite material 1 is, for example, 10 mass% to 80 mass%, preferably 10 mass% to 70 mass%, and more preferably 10 mass% to 55 mass%. The amount of the inorganic particles 20 in the composite material 1 is, for example, 1 volume% to 50 volume%, preferably 2 volume% to 45 volume%, more preferably 5 volume% to 40 volume%, and particularly preferably 5 volume% to 30 volume%. The composite material 1 can exhibit higher heat conductivity performance and an appropriate rigidity by appropriate adjustment of the amount of the inorganic particles 20.

The amount [mass%] of the inorganic particles 20 in the composite material 1 can be determined by removing a material other than the inorganic particle 20 from the composite material 1 by, for example, burning. For accurate measurement, the amount [mass%] of the inorganic particles may be calculated by element analysis. Specifically, an acid is added to the composite material 1, and a microwave is applied to the acid and the composite material 1 for acid decomposition of the composite material 1 under pressure. For example, hydrofluoric acid, concentrated sulfuric acid, concentrated hydrochloric acid, aqua regia, or the like can be used as the acid. Element analysis is performed by an inductively coupled plasma atomic emission spectroscopy (ICP-AES) for a solution obtained by the acid decomposition under pressure. The amount [mass%] of the inorganic particles 20 can be determined on the basis of the analysis result.

The amount [volume%] of the inorganic particles 20 in the composite material 1 can be determined from the mass and density of the inorganic particles 20 included in the composite material 1 and the volume and void ratio of the composite material 1. Specifically, a volume A of the inorganic particles 20 in the composite material 1 is calculated from the mass and density of the inorganic particles 20. Separately, a volume B of the composite material 1 is calculated on the basis of the void ratio of the composite material 1, the volume B not including the volume of the voids 40. The amount [volume%] of the inorganic particles 20 can be determined by (A/B) × 100. The method for calculating the void ratio will be later described.

The density of the inorganic particles 20 can be determined according to Japanese Industrial Standards (JIS) R 1628: 1997 or JIS Z 2504: 2012 for the inorganic particles 20 left over after burning an organic material by heating the composite material 1 in an electric furnace at high temperatures.

At least some of the inorganic particles 20 in the first layer 3 are present in a portion between the frame portion 30 and the second layer 4. Other inorganic particles 21 and 22 of the inorganic particles 20 may be present in the first layer 3 and in the connecting portion 43 between the voids 40. In these portions, an inorganic particle 23 of the inorganic particles 20 may be on another inorganic particle 20 in a thickness direction of the first layer 3. At least some of the inorganic particles 20 are in contact with or very close to another inorganic particle adjacent thereto and form a portion of the heat transmission paths 5 and 6. However, another inorganic particle 24 of the inorganic particles 20 may be surrounded by the frame portion 30. In other words, the frame portion 30 can include the inorganic particle 24 not in contact with the void 40.

Substantially all the inorganic particles 20 may be present in the first layer 3. Herein, the term "substantially all" means 90 mass% or more, even 93 mass% or more, and particularly 95 mass% or more. In this embodiment, a proportion of the inorganic particles contributing to improvement of the heat conductivity is higher. Distribution of the inorganic particles 20 inside the frame portion 30 can be measured, for example, by three-dimensional X-ray microscope observation (X-ray CT).

The first resin included in the frame portion 30 is, for example, a crosslinked polymer. The first resin may be a thermosetting resin. Examples of the thermosetting resin include phenolic resins, urea resins, melamine resins, diallyl phthalate resins, polyester resins, epoxy resins, aniline resins, silicone resins, furan resins, polyurethane resins, alkylbenzene resins, guanamine resins, xylene resins, and imide resins. A curing temperature of the resin is, for example, 25°C to 160°C.

The first resin may be a thermoplastic resin. Examples of the thermoplastic resin include (meth)acrylic resins, styrene resins, polyethylene terephthalate resins, polyethylene resins, polypropylene resins, polyvinyl chloride resins, acrylonitrile-butadiene-styrene resins, and acrylonitrile-styrene resins.

For example, the frame portion 30 is free of the inorganic particles 20, or includes a smaller amount of the inorganic particles 20 than the first layer 3. Such configurations can decrease the amount of the inorganic particles 20 in the composite material 1. Consequently, the composite material 1 having excellent heat conductivity performance can be obtained while the amount of the inorganic particles 20 used is decreased. The amounts of the inorganic particles 20 included in the frame portion 30 and the first layer 3 can be, for example, compared in the following manner using a scanning electron microscope by energy dispersive X-ray spectroscopy (SEM-EDX). Specifically, for the frame portion 30, a ratio X of a rate of an atom derived from the inorganic particle 20 to a rate of a resin-derived atom is calculated. Likewise, for the first layer 3, a ratio Y of the rate of the atom derived from the inorganic particle 20 to the rate of a resin-derived atom is calculated. When the relation between X and Y satisfies X < Y, it can be concluded that the amount of the inorganic particles 20 included in the frame portion 30 is smaller than the amount of the inorganic particles 20 included in the first layer 3.

The first layer 3 may include the first resin and/or the second resin in addition to the inorganic particles 20. The second layer 4 includes the first resin and/or the second resin. The second resin may be a crosslinked polymer. The second resin is, for example, a thermosetting resin. Examples of the thermosetting resin are as described above. A flow temperature of the first resin may be higher than that of resin particles used for void formation. A flow temperature of the second resin may also be higher than that of the resin particles. None of the resin particles used for void formation remain in the composite material 1 in some cases, but the resin particles used for void formation remain in the voids 40 as shrunk particles 60 in other cases. The term "flow temperature" refers to, for example, a temperature at which a resin starts flowing. The flow temperature can be analyzed, for example, by a constant temperature increase test using a thermal flow evaluation system (flow tester) (CFT-500D (PC) manufactured by Shimadzu Corporation).

In the composite material 1, at least one resin selected from the group consisting of the first resin and the second resin preferably includes a crosslinked polymer.

The second layer 4 includes, for example, a smaller amount of the inorganic particles 20 than the first layer 3. Such a configuration can decrease the amount of the inorganic particles 20 in the composite material 1. Consequently, the composite material 1 having excellent heat conductivity performance can be obtained while the amount of the inorganic particles 20 used is decreased. The amounts of the inorganic particles 20 included in the second layer 4 and the first layer 3 can be compared, for example, in the following manner by SEM-EDX. Specifically, a rate P [atomic%] of the atom derived from the inorganic particle 20 is calculated by analyzing the second layer 4 by SEM-EDX. Likewise, a rate Q [atomic%] of the atom derived from the inorganic particle 20 is calculated by analyzing the first layer 3. When P and Q satisfy a relation P < Q, it can be concluded that the amount of the inorganic particles 20 included in the second layer 4 is smaller than the amount of the inorganic particles 20 included in the first layer 3. In the composite material 1, P and Q may satisfy a relation P/Q ≤ 0.3.

The second layer 4 has an average thickness of, for example, 0.01 µm to 100 µm. The average thickness of the second layer 4 may be 0.05 µm to 50 µm, or 0.1 µm to 20 µm. The average thickness of the second layer 4 may be smaller than that of the first layer.

The average thickness of the second layer 4 can be determined, for example, by observation of a cross-section of the composite material 1 using a SEM or the like. Specifically, an arithmetic average of thickness values measured for the second layer 4 at 10 arbitrarily chosen points or, in some cases, 30 arbitrarily chosen points using a SEM can be the average thickness of the second layer 4. The average thickness of the first layer 3 can be determined in the same manner. The interface between the first layer 3 and the frame portion 30 and the interface between the first layer 3 and the second layer 4 can be determined assuming that a layer region where the inorganic particles are present continuously, i.e., in contact with each other or close to each other is the first layer 3.

Outer shapes of the voids 40 and 50 may be in a sphere-like shape, and may be substantially spherical. Herein, the term "substantially spherical" means that a ratio (maximum diameter/minimum diameter) of the maximum diameter to the minimum diameter is 1.0 to 1.5, particularly 1.0 to 1.3. However, the outer shapes of the voids 40 and 50 are not limited to particular shapes. The outer shapes of the voids 40 and 50 may be a rod-like or polyhedral shape, or may be an ellipsoidal shape having too large a ratio of the maximum diameter to the minimum diameter to call the shape a sphere-like shape. Fifty percent or more or even 80% or more of the voids 40 and 50 may have a sphere-like shape. It is difficult to form voids having shapes as uniform as the above by foaming techniques, by which irregularly shaped voids are formed.

The average diameter of the voids 40 is not limited to a particular value. The average diameter of the voids 40 is, for example, 50 µm to 5000 µm, preferably 100 µm to 2000 µm, and more preferably 300 µm to 1500 µm. Herein, the "average diameter" of the voids 40 refers to the average of diameters thereof determined by observation of a cross-section of the composite material 1 using a SEM. Specifically, any one hundred voids 40 that are each observable entirely are measured for their maximum and minimum diameters, the average of the maximum and minimum diameters of each void is defined as the diameter of the void, and the average of the diameters of fifteen voids having the largest to fifteenth largest diameters is defined as the "average diameter".

In the composite material 1, a ratio of the volume of the voids 40 to the volume of the composite material 1, namely, the void ratio, is not limited to a particular value. The void ratio is, for example, 10 volume% to 60 volume%, preferably 15 volume% to 50 volume%, and more preferably 20 volume% to 45 volume%.

The void ratio can be determined by observing 10 different cross-sections of the composite material 1 using a SEM, calculating a ratio of the total area of the voids 40 to the total area observed for each of the 10 images of the cross-sections, and averaging the 10 ratios. However, the void ratio may be determined in the following manner only when the manufacturing process is known. From the mass of the later-described resin particle and the mass of the composite particle in which the inorganic particles 20 are placed on a surface of the resin particle, the mass of the inorganic particles 20 included in the composite particle is calculated. Separately, the amount [mass%] of the inorganic particles 20 in the composite material 1 is calculated by inorganic element analysis. The mass of the inorganic particles 20 in the composite material 1 is calculated from the amount [mass%] of the inorganic particles 20 and the mass of the composite material 1. The number of composite particles used to manufacture the composite material 1 is calculated from the mass of the inorganic particles 20 in the composite material 1 and the mass of the inorganic particles 20 included in the composite particle. The volume of the void 40 is calculated from the average diameter of the voids 40. The total volume of the voids 40 in the composite material 1 is determined by multiplying the volume of the void 40 by the number of the composite particles. The total volume of the voids 40 in the composite material 1 is divided by the volume of the composite material 1 to calculate the void ratio.

The plurality of voids 40 may have substantially similar outer shapes. Herein, the term "substantially similar" means that on a number basis, 80% or more, particularly 90% or more, of the voids 40 have the same type of a geometric shape, for example, a sphere-like or regular polyhedron shape. The outer shapes of the substantially similar voids 40 preferably have sphere-like shapes. The outer shapes thereof may be substantially spherical. A plurality of voids formed by foaming can also come in contact with each other as a result of expansion. However, in this case, an internal pressure caused by foaming commonly acts on a connecting portion between the voids, greatly deforming a vicinity of the connecting portion. Therefore, it is virtually impossible to form a plurality of voids in contact with each other and having substantially similar outer shapes by foaming techniques.

The porous structure may have a through hole extending from one principal surface to the other principal surface of the composite material 1. When the composite material 1 has a plate shape, the void provided on one principal surface of the composite material 1 may communicate to a space facing the other principal surface of the composite material 1. The void provided on one principal surface of the composite material 1 may communicate to a space in contact with a lateral face adjacent to the one principal surface of the composite material 1. With such structural features, the composite material 1 can have both the heat conductivity and the air permeability. The term "principal surface" of the composite material 1 refers to a surface thereof having the largest area.

The plurality of voids 40 may be locally in contact with each other. In this case, the strength of the composite material 1 is unlikely to be decreased even when the void ratio is increased. The diameter of a communicating portion allowing communication between the voids in the connecting portion 45 may be 25% or less, 20% or less, or even 15% or less of the average diameter of the voids 40. The diameter of the communicating portion can be measured by a SEM or X-ray CT, as for the average diameter. Since the connecting portions 41 and 43 connecting the voids 40 are each partitioned by the first layer 3, there is no communicating portion in the connecting portions 41 and 43.

As is obvious from the above description, the composite material 1 may be a non-foam body. Conventional foam bodies as described in Patent Literature 1 cannot have characteristic structures as shown in FIGS. 1 and 2, namely, structures in which placement of the inorganic particles 20 is controlled delicately and precisely. Moreover, conventional foam bodies cannot have structures in which a second layer is provided to cover a first layer including inorganic particles.

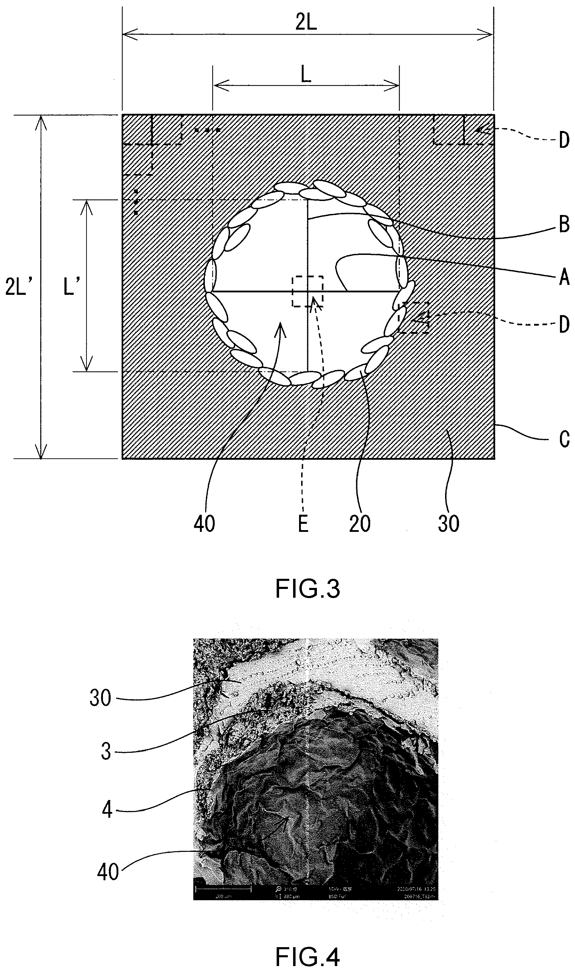

An example of a method for determining herein measurement positions in the composite material 1 will be described with reference to FIG. 3, the measurement positions being for determining elemental compositions in the first layer 3, the second layer 4, and the frame portion 30. First, the void 40 of the composite material 1 is observed using a SEM. The maximum diameter of the void 40 observed using the SEM was measured, and a line segment A having a length L of the maximum diameter is defined. Next, a line segment B passing through a midpoint of the line segment A to be perpendicular to the line segment A is defined, the line segment B having a length L' from one end of the void 40 to the other end of the void 40. Furthermore, a rectangle C having a center of gravity at the midpoint of the line segment A is defined, the rectangle C having a first side and a second side adjacent to the first side, the first side being parallel to the line segment A and having a length (2L in a direction parallel to the line segment A) twice as long as the line segment A, the second side being parallel to the line segment B and having a length (2L' in a direction parallel to the line segment B) twice as long as the line segment B. A region determined by removing a void portion from the rectangle C is defined as a measurement region. This measurement region is divided into a plurality of regions D each defined by a 50-µm square. For each of the plurality of regions D, a rate of an atom included in the region D is analyzed. For example, energy dispersive X-ray spectroscopy and an ultra-high-resolution field-emission scanning electron microscope are employed for the analysis.

On the basis of the result of the above analysis of the plurality of regions D, a region where a rate [atomic%] of an atom (e.g., B) included in the inorganic particle(s) is largest is defined as the measurement position for the composition in the first layer 3. On the basis of the result of the above analysis of the plurality of regions D, a region where a rate [atomic%] of an atom (e.g., B) included in the inorganic particle(s) is smallest is defined as the measurement position for the composition in the frame portion 30. Separately, a region having a center of gravity at the intersection of the line segments A and B and defined by a 50 µm square is defined as a region E. The region E is defined as the measurement position for the second layer 4. When the inorganic particle is formed of a compound, the atom to be analyzed is recommended to be an element of a cation in the compound. When the inorganic particle is formed of a simple substance, the atom to be analyzed is recommended to be the element forming the simple substance. For example, when the inorganic particle is formed of boron nitride (BN), the atom to be analyzed is boron (B). When the inorganic particle is formed of alumina (Al₂O₃), the atom to be analyzed is aluminum (Al). When the inorganic particle is formed of graphite, the atom to be analyzed is carbon (C).

### <Composite material manufacturing method>

An example of a method for manufacturing the composite material 1 according to the present embodiment will be described hereinafter. The composite material 1 includes: the frame portion 30 including the first resin; and the plurality of voids 40. The method for manufacturing the composite material 1 includes, in the following order: charging a fluid in a gap in a particle aggregate including a plurality of resin particles, the fluid including the first resin or a precursor of the first resin; and forming the plurality of voids 40 by shrinking or removing the plurality of resin particles by heating the plurality of resin particles. Here, the first layer 3 and the second layer 4 are present on a surface of each resin particle. The first layer 3 and the second layer 4 are placed such that the second layer 4 is positioned between the surface of the resin particle and the first layer 3 and the surface of the resin particle and the second layer 4 are in contact with each other. Additionally, the first layer 3 includes the plurality of inorganic particles. The second layer 4 includes at least one resin selected from the group consisting of the first resin and the second resin different from the first resin. The at least one resin selected from the group consisting of the first resin and the second resin may include a crosslinked polymer. The flow temperature of the first resin and, in the case where the second layer 4 includes the second resin, the flow temperature of the second resin may be higher than that of a resin forming the resin particles.

For the composite particles, a mixture of the resin particles and an adhesive is produced first. The adhesive includes, for example, the first resin and/or the second resin. The adhesive may include the precursor of the first resin and/or that of the second resin.

Next, the inorganic particles 20 are added to and mixed with the mixture to obtain composite particles formed of the inorganic particles 20 placed on the surfaces of the resin particles. The step of adding the adhesive to the resin particles to obtain the mixture and the step of adding the inorganic particles 20 to the mixture may be repeated two or more times. Alternatively, an adhesive and the inorganic particles 20 may be added in parallel into the mixture of the resin particles and the adhesive and then mixed with the mixture to obtain the composite particles. The mixing method is not limited to a particular method. Examples of the mixing method include mixing using a ball mill, a bead mill, a planetary mixer, an ultrasonic mixer, a homogenizer, a planetary centrifugal mixer, a flow type mixer, a Henschel mixer, a container rotating blender, a ribbon blender, or a conical screw blender.

Next, the composite particles are put in a mold such that the composite particles are in contact with each other to form a particle aggregate. A fluid separately prepared is further added to the mold to prepare a mixed body. The fluid includes the first resin. The fluid may include the precursor of the first resin. The fluid is charged in the gap in the particle aggregate including the plurality of resin particles. The fluid is present at least on the surface of the composite particle and in a portion where the composite particles are in contact with each other. In this manner, the aggregate of the composite particles is formed in which at least some of the plurality of composite particles are in contact with each other such that a heat transmission path formed of the inorganic particles 20 in contact with each other stretches along the surfaces of the composite particles.

Next, bubbles are removed from the mixed body. The method for removing bubbles from the mixed body is not limited to a particular method. An example of the method is degassing under reduced pressure. Degassing under reduced pressure is performed, for example, at 25°C to 200°C for 1 second to 10 seconds.

Subsequently, the flowability of the fluid is decreased by heating the mixed body. Heating of the fluid causes, for example, progression of a reaction of generating the first resin from the precursor of the first resin or progression of curing of the first resin, thereby decreasing the flowability of the fluid. The frame portion 30 including the first resin is generated in this manner. A precursor of the composite material can be obtained in this manner.

Next, the composite material 1 is produced by shrinking the resin particles or removing the resin particles from the precursor of the composite material. The method for shrinking the resin particles or removing the resin particles from the precursor of the composite material is not limited to a particular method. Examples of the method include a method in which the precursor of the composite material is heated and a method in which the precursor of the composite material is immersed in a particular solvent. These methods may be used in combination. The voids 40 are formed by shrinking or removing the resin particles. In this manner, the composite material 1 including the frame portion 30, the first layer 3, and the second layer 4 can be obtained.

Alternatively, the composite material 1 may be produced in the following manner. First, the composite particles in which the adhesive and the inorganic particles 20 are placed on the surfaces of the plurality of resin particles are produced. The method for producing the composite particles is as described above. Next, the produced composite particles are heated to decrease the flowability of the adhesive placed on the surfaces of the composite particles. Heating of the adhesive causes, for example, progression of a reaction by which the first resin and/or the second resin is generated from the precursor of the first resin and/or that of the second resin or progression of curing of the first resin and/or the second resin, thereby decreasing the flowability of the adhesive. In this manner, a composite particle material including the first layer and the second layer on the surface of the resin particle and also including the inorganic particles 20 is generated.

A void is formed inside the composite particle material by shrinking or removing the resin particle from the composite particle material. The method for shrinking or removing the resin particle is as described above.

Next, thus-produced composite particle materials including the voids are stored in a mold. A fluid separately prepared is also added to the mold to prepare a mixed body. The method for producing the mixed body is as described above.

After that, the flowability of the fluid is decreased by heating the mixed body. The method for decreasing the flowability of the fluid is as described above. The composite material 1 including the frame portion 30, the first layer 3, and the second layer 4 can be obtained in this manner, too.

According to the above example of the manufacturing method, the second layer 4 is formed of the resin(s) or the precursor(s) thereof positioned between the surface of the resin particle and the inorganic particle 20. The resin(s) may be the first resin, i.e., the resin included in the frame portion 30, and/or may be the second resin, i.e., a resin different from the first resin. A crosslinkable polymer that undergoes crosslinking is suitable as the resin(s) or the precursor(s) thereof. It has been confirmed that the second layer 4 is not formed, for example, when a polyethylene glycol being a non-crosslinkable polymer is used in this example of the manufacturing method. However, by another method for manufacturing the composite material 1, the second layer 4 can be formed with less strict limitations on the material. Such a method is, for example, a method in which only the second layer 4 including the resin(s) or the precursor(s) thereof is formed on the entire surface of the resin particle before the first layer 3 is formed.

A temperature at which the precursor of the composite material is heated is not limited to a particular temperature as long as the resin particles can be softened at the temperature. The temperature may be, for example, 95°C to 130°C or 120°C to 160°C. As described above, the flow temperature of the adhesive is, for example, higher than that of the resin particles. Therefore, the adhesive is unlikely to become flowable by heating the precursor of the composite material to soften the resin particles. As a result, the second layer 4 is likely to be formed to cover the first layer 3 including the inorganic particles 20.

In the case where the precursor of the composite material is immersed in a particular solvent, the solvent is not limited to a particular solvent as long as the solvent does not dissolve the first resin or the second resin but can dissolve the resin particles. Examples of the solvent include toluene, ethyl acetate, methyl ethyl ketone, and acetone.

The resin particles may have a hollow structure. A hollow portion in the hollow structure may be a single hollow portion, or, as with a foamed resin bead, may be composed of a plurality of hollow portions. When the resin particles having the hollow structure are used, the resin forming the resin particles is softened by a heating treatment and the hollow portions therein disappear or shrink to form the plurality of voids 40. However, the hollow structure of the resin particle is not essential. In the case where the precursor of the composite material is immersed in the particular solvent, it is preferable that the resin particles be, for example, more easily dissolved in the solvent than the first resin or the second resin. The void 40 having a desired shape is likely to be formed by this method. Examples of the material of the resin particles include polystyrene (PS), polyethylene (PE), polymethyl methacrylate (PMMA), ethylene-vinyl acetate copolymer (EVA), polyethylene (PE), polyvinyl chloride (PVC), polypropylene (PP), acrylonitrile-butadiene-styrene copolymer (ABS), ethylene-propylene-diene rubber (EPDM), thermoplastic elastomers (TPE), and polyvinyl alcohol (PVA). The first resin is, for example, the resin included in the frame portion 30.

The size of the resin particle is not limited to a particular one. When the resin particles are spherical, the average diameter thereof is, for example, 50 µm to 5000 µm, preferably 300 µm to 2000 µm, and particularly 500 µm to 1500 µm. The composite material 1 can have an appropriate void ratio by appropriate adjustment of the resin particle size. In addition, the composite material 1 can have the voids of an appropriate size by appropriate adjustment of the resin particle size. As the resin particles may be used resin particles of different sizes selected from the above sizes. That is, the resin particles may have substantially similar outer shapes from each other. As a result, the plurality of voids 40 of the composite material 1 can have substantially similar outer shapes from each other.

According to the method for manufacturing the composite material 1 of the present embodiment, the first layer 3 including the inorganic particles 20 and the second layer 4 covering the first layer 3 from a farther side of the first layer 3 can be formed, the second layer 4 facing the void 40, the farther side being farther from the frame portion 30. Moreover, the heat transmission path stretches through the plurality of voids 40 is formed of the inorganic particles 20.

According to the method for manufacturing the composite material 1 of the present embodiment, the voids 40 are formed inside the first resin without a foaming step. That is, the voids 40 are not formed by foaming.

### EXAMPLES

Hereinafter, the present invention will be described in more detail with reference to examples. The present invention is not limited to the following examples.

### (Production of polystyrene beads)

Into an autoclave equipped with a stirrer were added 100 parts by weight of pure water, 0.2 parts by weight of tricalcium phosphate, and 0.01 parts by weight of sodium dodecylbenzene sulfonate. Into the autoclave were added 0.15 parts by weight of benzoyl peroxide and 0.25 parts by weight of 1,1-bis(t-butylperoxy)cyclohexane as initiators to produce a liquid mixture. An amount of 100 parts by weight of a styrene monomer was added to the liquid mixture while the liquid mixture was being stirred at 350 revolutions per minute. After that, the temperature of the solution was increased to 98°C to perform a polymerization reaction. When the polymerization reaction is about 80% complete, the temperature of the reaction solution was increased to 120°C over 30 minutes. The reaction solution was then maintained at 120°C for one hour to produce a styrene-resin-particle-containing solution. The styrene-resin-particle-containing solution was cooled to 95°C, and then 2 parts by weight of cyclohexane and 7 parts by weight of butane as blowing agents were introduced into the autoclave by pressure. After that, the temperature of the solution was increased to 120°C again. The solution was then maintained at 120°C for one hour, and then cooled to room temperature to obtain a polymerized slurry. The polymerized slurry was dehydrated, washed, and dried to obtain expandable styrene resin particles. The expandable styrene resin particles were sieved to obtain expandable styrene resin particles having a particle diameter of 0.2 mm to 0.3 mm. From the expandable styrene resin particles, sphere-like expanded polystyrene beads having an average diameter of 650 µm to 1200 µm were obtained using a pressure expansion machine (BHP) manufactured by Obiraki Industry Co., Ltd. The expanded polystyrene beads were sieved using JIS test sieves having nominal aperture sizes (JIS Z 8801-1: 2019) of 1.18 mm and 1 mm. Expanded polystyrene beads passing through the sieve having a nominal aperture size of 1.18 mm and not passing through the sieve having a nominal aperture size of 1 mm were used in tests below. The expanded polystyrene beads had a bulk density of 0.025 g/cm³.

### (Example 1)

A silicone resin (KE-106F) manufactured by Shin-Etsu Chemical Co., Ltd., a curing agent (CAT-106F) manufactured by Shin-Etsu Chemical Co., Ltd., and a silicone oil (KF-96-10CS) manufactured by Shin-Etsu Chemical Co., Ltd. were weighed at a weight ratio of 10:1:10 and were mixed to prepare a silicone resin precursor as an adhesive. An amount of 10 parts by weight of this silicone resin precursor was prepared with respect to one part by weight of the expanded polystyrene beads. Separately, 15 parts by weight of scaly boron nitride (aspect ratio: 20) was prepared with respect to one part by weight of the expanded polystyrene bead.

One part by weight of the above sphere-like expanded polystyrene beads was added into a high-speed flow type mixer (SMP-2) manufactured by KAWATA MFG. CO., LTD. Then, one part by weight of the above silicone resin precursor was added to prepare a mixture. The mixture was stirred at 1000 revolutions per minute for one minute using the above mixer. An amount of 1.5 parts by weight of the above boron nitride was added thereto to prepare a mixture. The mixture was stirred at 1000 revolutions per minute for one minute using the above mixer. Such a process of coating the expanded polystyrene beads with the boron nitride via the silicone resin precursor was repeated 10 times to obtain expanded polystyrene beads coated with boron nitride. The polystyrene beads were heated in a constant-temperature chamber at 60°C for two hours to cure the silicone resin. Boron-nitride-coated polystyrene beads (composite particles) were obtained in this manner.

A silicone resin (KE-106F) and a silicone oil (KF-96-10CS) both manufactured by Shin-Etsu Chemical Co., Ltd. were added at a weight ratio of 10:5. To the resulting mixture was further added a curing agent (CAT-106F) manufactured by Shin-Etsu Chemical Co., Ltd. so that the silicone resin and the curing agent would be in a weight ratio of 10:0.85. A thermosetting resin was produced in this manner.

The boron-nitride-coated polystyrene beads were charged in a plastic case having inner dimensions of 95 mm × 95 mm × 24 mm, a plain-woven metal mesh (diameter: 0.18 mm; 50-mesh) made of stainless steel manufactured by YOSHIDA TAKA K.K. was laid on the plastic case, and a perforated metal (diameter: 5 mm; thickness: 1 mm; pitch: 8 mm) made of stainless steel was further laid on the plain-woven metal mesh. The plastic case, the plain-woven metal mesh, and the perforated metal were fixed with a clamp.

The above thermosetting resin was added into the plastic case and defoamed under reduced pressure. The pressure applied was -0.08 MPa to -0.09 MPa in gauge pressure. This process was repeated three times to impregnate a gap between the polystyrene beads with the thermosetting resin. Next, the silicone resin was cured by heating at 80°C for two hours to obtain a resin molded article including polystyrene beads. The resin molded article was cut to given dimensions. The resulting resin molded article was immersed in acetone for 30 minutes to dissolve the polystyrene beads and let the polystyrene beads flow out of the resin molded article. After that, the resin molded article was heated at 90°C to vaporize acetone. A composite material according to Example 1 was produced in this manner.

### (Example 2)

A composite material according to Example 2 was obtained in the same manner as in Example 1, except that a boron nitride shown in Table 1 was used and the mixture was prepared to be a ratio shown in Table 1.

### (Example 3)

A composite material according to Example 3 was obtained in the same manner as in Example 1, except that a boron nitride shown in Table 1 was used, polyurethane (UF820A/B) manufactured by Sanyu Rec Co., Ltd. was used instead of the silicone resin in production of the composite particles and the composite material, and the mixture was prepared to be a ratio shown in Table 1.

### (Example 4)

A composite material according to Example 4 was obtained in the same manner as in Example 1, except that graphite (CPB) manufactured by Nippon Graphite Industries, ltd. was used instead of the boron nitride and the mixture was prepared to be a ratio shown in Table 1.

### (Example 5)

A composite material according to Example 5 was obtained in the same manner as in Example 1, except that alumina particles (AL-30) manufactured by SHOWA DENKO K.K. were used instead of the boron nitride and the mixture was prepared to be a ratio shown in Table 1.

### (Example 6)

Agents A and B of DOWSIL SE 1896 FR A/B manufactured by Dow Inc. were mixed at a weight ratio of 1:1 to prepare a silicone resin precursor as an adhesive. An amount of 7.5 parts by weight of this silicone resin precursor was prepared with respect to one part by weight of the expanded polystyrene beads. Separately, with respect to one part by weight of the expanded polystyrene beads, 13.3 parts by weight of scaly boron nitride (aspect ratio: 20) and 1.3 parts by weight of graphite (aspect ratio: 12) were mixed to prepare a filler mixture.

One part by weight of the above sphere-like expanded polystyrene beads were added into a high-speed flow type mixer (SMP-2) manufactured by KAWATA MFG. CO., LTD. Next, 0.3 parts by weight of the above silicone resin precursor was added thereto, and the resulting mixture was stirred at 1000 revolutions per minute for one minute. While the mixture was being stirred in the above mixer at 1000 revolutions per minute, the rest of the silicone resin precursor and the above filler mixture were added in parallel into the mixture over 30 minutes at constant rates. The expanded polystyrene beads coated with the boron nitride and the graphite via the silicone resin precursor were obtained by this process. The polystyrene beads were heated in a constant-temperature chamber at 80°C for two hours to cure the silicone resin. Polystyrene beads (composite particles) coated with boron nitride and graphite were obtained in this manner.

Agents A and B of DOWSIL SE 1817 CV M manufactured by Dow Inc. and a silicone oil (KF-96-300CS) were used as a thermosetting resin. The thermosetting resin was prepared by mixing the agent A, the agent B, and the silicone oil at a weight ratio of 37.5:37.5:25.

A composite material according to Example 6 was obtained in the same manner as in Example 1, except that the above composite particles and thermosetting resin were used.

### (Example 7)

A composite material according to Example 7 was obtained in the same manner as in Example 6, except that an urethane resin SU-4500A/B (agents A and B were mixed at a weight ratio of 5:100) available from Sanyu Rec Co., Ltd. was used as the adhesive for production of the composite particles and an urethane resin SU-3001A/B (agents A and B were mixed at a weight ratio of 34:100) available from Sanyu Rec Co., Ltd. was used as the thermosetting resin for production of the composite material.

### (Comparative Example 1)

Boron-nitride-coated polystyrene beads (composite particles) according to Comparative Example 1 were obtained in the same manner as in Example 1, except that polyethylene glycol (average molecular weight: 400) was used as the adhesive instead of the silicone resin precursor in production of the composite particles. A composite material according to Comparative Example 1 was obtained in the same manner as in Example 1, except that the composite particles according to Comparative Example 1 were used.

### (Comparative Example 2)

Scaly boron nitride (aspect ratio: 50), a silicone resin (KE-106F) manufactured by Shin-Etsu Chemical Co., Ltd., a silicone oil (KF-96-10CS) manufactured by Shin-Etsu Chemical Co., Ltd., a curing agent (CAT-106F) manufactured by Shin-Etsu Chemical Co., Ltd., and ethanol were weighed at a weight ratio of 60:25:13:2:1 and mixed to prepare a mixture in a slurry state. The mixture was placed into a tubular mold having a bottom and having a diameter of 50 mm and a height of 7 mm. Next, the mixture in the mold was heated at 150°C for one hour to foam the silicone resin by the ethanol and cure the foamed silicone resin. A composite material according to Comparative Example 2 was obtained in this manner.

### (Comparative Example 3)

A composite material according to Comparative Example 3 was obtained in the same manner as in Comparative Example 2, except that an unsaturated polyester resin (WP2820) manufactured by Hitachi Chemical Company, Ltd. was used instead of the silicone resin.

### (Examination of elution of inorganic particles)

Each of the composite materials according to Examples 1 to 7 and Comparative Examples 1 to 3 was immersed in toluene for one hour. After that, the composite material was taken out of the toluene, and whether the toluene had become cloudy due to the inorganic particles was visually examined. When cloudiness was not confirmed, the evaluation result was "Not eluted". When cloudiness was confirmed, the evaluation result was "Eluted". Tables 1 and 2 show the results.

### (Examination of detachment of inorganic particles)

The composite materials according to Examples 1 to 7 and Comparative Examples 1 to 3 were shaken at vibration level 6 using a desktop vibrator (Angel Vibrator Digital) manufactured by DAIEI DENTAL PRODUCTS Co., Ltd. After the shaking of the composite materials, whether the inorganic particles had become detached from the composite materials was visually examined. When detachment of the inorganic particles from the composite material was not confirmed, the evaluation result was "Not detached". When detachment of the inorganic particles from the composite material was confirmed, the evaluation result was "Detached". Tables 1 and 2 show the results.

### (Average thickness of second layer)

Each of the composite materials according to Examples 1 to 7 and Comparative Examples 1 to 3 was measured for the thickness of the second layer using a scanning electron microscope (SEM). A void was observed using a SEM. The thickness of the second layer was measured at 10 arbitrarily chosen points, and the average of the obtained values was defined as the average thickness of the second layer. As for Comparative Examples 1 to 3, existence of the second layer was unable to be confirmed, and a layered structure formed of the second layer, the first layer, and the frame portion was unable to be confirmed, either. Tables 1 and 2 show the results.

### (Element analysis and inorganic particle content)

Element analysis of the composite materials was performed by the above-described method to calculate a rate of an atom derived from the inorganic particles. As for Comparative Examples, where at least the second layer does not exist, the results of element analysis in the above measurement positions are shown. In Table 1, "-" indicates that an atom derived from the inorganic particles was not detected.

The rate of the atom derived from the inorganic particles in the second layer was higher in Example 4 than in Examples 1 to 3 and 5. In Example 4, graphite was used as the inorganic particles. Moreover, in the composite material according to Example 4, a silicone resin was used as the adhesive for forming the second layer and the resin for forming the frame portion. Therefore, it is thought that a carbon atom derived from the silicone resin were detected in Example 4 as well as a carbon atom derived from the graphite. The rate of the atom derived from the inorganic particles in the second layer was therefore higher in Example 4 than in other Examples. However, the rate of a carbon atom in the second layer is smaller than that in the first layer in the composite material according to Example 4. That is, the second layer includes a smaller amount of the inorganic particles than the first layer also in the composite material according to Example 4.

In Examples 6 and 7, boron nitride and graphite were used as the inorganic particles. In the composite material according to Example 6, a silicone resin is used as the adhesive for forming the second layer and the resin for forming the frame portion. In the composite material according to Example 7, polyurethane was used as the adhesive for forming the second layer and the resin for forming the frame portion. It is therefore thought that a carbon atom derived from the silicone resin and the polyurethane as well as a carbon atom derived from the graphite are detected by the element analysis of the composite materials according to Examples 6 and 7. For this reason, only the analysis result for a boron atom derived from the boron nitride is shown for Examples 6 and 7 as the rate of the atom derived from the inorganic particles in the second layer. In each of Examples 6 and 7, the rate of the boron atom in the second layer is smaller than that in the first layer. Moreover, as described above, in the composite material according to Example 4 including graphite as the inorganic particles, the rate of the carbon atom in the second layer is smaller than that in the first layer. That is, it can be understood that the second layer includes a smaller amount of the inorganic particles than the first layer even in the case of using graphite as the inorganic particles. From these results, it is inferred that also in the composite materials according to Examples 6 and 7, the second layer includes a smaller amount of the inorganic particles than the first layer.

**[Table 1]**

| | Example 1 | Example 2 | Example 3 | Example 4 | Example 5 | Example 6 | Example 7 |
|---|---|---|---|---|---|---|---|
| Adhesive | Silicone | Silicone | Polyurethane | Silicone | Silicone | Silicone | Polyurethane |
| Frame portion resin | Silicone | Silicone | Polyurethane | Silicone | Silicone | Silicone | Polyurethane |
| Inorganic particles | Boron nitride | Boron nitride | Boron nitride | Graphite | Alumina particles | Boron nitride + Graphite | Boron nitride + Graphite |
| Shape and aspect ratio of inorganic particle | Scaly 20 | Scaly 50 | Scaly 20 | Scaly 12 | Spherical 1 | Boron nitride: scaly, 20 | Boron nitride: scaly, 20 |
| | | | | | | Graphite: scaly, 12 | Graphite: scaly, 12 |
| Inorganic particle content (wt%) | 25 | 30 | 35 | 30 | 30 | 25 | 25 |
| State of inner wall of void | Inorganic particles not visually confirmed | Inorganic particles not visually confirmed | Inorganic particles not visually confirmed | Inorganic particles not visually confirmed | Inorganic particles not visually confirmed | Inorganic particles not visually confirmed | Inorganic particles not visually confirmed |
| Composite material forming method | Using resin particles | Using resin particles | Using resin particles | Using resin particles | Using resin particles | Using resin particles | Using resin particles |
| Formation of layered structure (second layer/first layer/frame portion) | Formed | Formed | Formed | Formed | Formed | Formed | Formed |
| Rate of atom derived from inorganic particles in second layer [atomic%] | 0 | 6.9 | 4.1 | 69.1 | 2.6 | 1.7 | 0 |
| Rate of atom derived from inorganic particles in first layer [atomic%] | 38.0 | 35.1 | 29.0 | 88.5 | 12.4 | 20.2 | 18.9 |
| Rate of atom derived from inorganic particles in frame portion [atomic%] | 6.6 | 5.2 | 3.7 | 48.3 | - | 2.3 | 0 |
| (Rate of atom derived from inorganic particles in second layer)/(Rate of atom derived from inorganic particle in first layer) | 0 | 0.20 | 0.14 | 0.78 | 0.21 | 0.08 | 0 |
| Average thickness of second layer [µm] | 0.5 | 5 | 0.8 | 0.5 | 5.5 | 0.5 | 0.5 |
| Detached particles in solvent | Not eluted | Not eluted | Not eluted | Not eluted | Not eluted | Not eluted | Not eluted |
| Detaching by shaker | Not detached | Not detached | Not detached | Not detached | Not detached | Not detached | Not detached |

**[Table 2]**

| | Comparative Example1 | Comparative Example 2 | Comparative Example 3 |
|---|---|---|---|
| Adhesive | PEG | Silicone | Polyester |
| Frame portion resin | Silicone | | |
| Inorganic particles | Boron nitride | Boron nitride | Boron nitride |
| Shape and aspect ratio of inorganic particle | Scaly 20 | Scaly 50 | Scaly 50 |
| Inorganic particle content (wt%) | 25 | 60 | 60 |
| State of inner wall of void | Inorganic particles visually confirmed on wall | Inorganic particles visually confirmed on wall | Inorganic particles visually confirmed on wall |
| Composite material forming method | Using resin particles | Foaming | Foaming |
| Formation of layered structure (second layer/first layer/frame portion) | Not formed | Not formed | Not formed |
| Rate of atom derived from inorganic particles in second layer [atomic%] | (23.7) | (29.7) | (24.7) |
| Rate of atom derived from inorganic particles in first layer [atomic%] | (18.8) | (25.8) | (28.0) |
| Rate of atom derived from inorganic particles in frame portion [atomic%] | (5.5) | (17.3) | (22.5) |
| (Rate of atom derived from inorganic particles in second layer)/(Rate of atom derived from inorganic particle in first layer) | (1.26) | (1.15) | (0.88) |
| Average thickness of second layer [µm] | 0 | 0 | 0 |
| Detached particles in solvent | Eluted | Eluted | Not eluted |
| Detaching by shaker | Not detached | Detached | Detached |

FIG. 4 shows the result of scanning electron microscope observation of a cross-section of the composite material according to Example 1. As shown in FIG. 4 as an example, in the composite materials according to Examples, the void 40 is provided inside the frame portion 30, and the first layer 3 including the inorganic particles and the second layer 4 covering the first layer 3 from the void 40 side are placed along the periphery of the void 40. It should be noted that although one resin material was used for the adhesive and the frame portion in each Example, the frame portion and the second layer can be configured to include different resins by using different resins for the adhesive and the frame portion.

## Claims

1. A composite material comprising:
a frame portion including a first resin;
a plurality of voids; and
a first layer and a second layer each placed along a periphery of each of the plurality of voids, wherein
the first layer includes a plurality of inorganic particles, and
the second layer includes at least one resin selected from the group consisting of the first resin and a second resin different from the first resin, covers the first layer from a farther side of the first layer, and faces the void, the farther side being farther from the frame portion.

2. The composite material according to claim 1, wherein at least one resin selected from the group consisting of the first resin and the second resin includes a crosslinked polymer.

3. The composite material according to claim 1 or 2, wherein the second layer includes a smaller amount of the inorganic particles than the first layer.

4. The composite material according to any one of claims 1 to 3, wherein the second layer includes the second resin.

5. The composite material according to any one of claims 1 to 4, wherein the frame portion is free of the inorganic particles, or includes a smaller amount of the inorganic particles than the first layer.

6. The composite material according to any one of claims 1 to 5, wherein the second layer has an average thickness of 0.01 µm to 100 µm.

7. The composite material according to any one of claims 1 to 6, wherein at least two of the voids are placed such that the first layers are connected to each other.

8. The composite material according to any one of claims 1 to 7, wherein a heat transmission path is formed of the plurality of inorganic particles.

9. The composite material according to any one of claims 1 to 8, wherein the plurality of voids have similar outer shapes.

10. A method for manufacturing a composite material comprising: a frame portion including a first resin; and a plurality of voids, the method comprising, in the following order:
charging a fluid in a gap in a particle aggregate including a plurality of resin particles, the fluid including the first resin or a precursor of the first resin, and
forming the plurality of voids by shrinking or removing the plurality of resin particles by heating the plurality of resin particles, wherein
a first layer and a second layer are present on each of surfaces of the plurality of resin particles,
the first layer and the second layer are placed such that the second layer is between the surface and the first layer and the surface and the second layer are in contact with each other,
the first layer includes a plurality of inorganic particles, and
the second layer includes at least one resin selected from the group consisting of the first resin and a second resin different from the first resin.

11. The method according to claim 10, wherein at least one resin selected from the group consisting of the first resin and the second resin includes a crosslinked polymer.

12. The method according to claim 10 or 11, wherein a flow temperature of the first resin and, in the case where the second layer includes the second resin, a flow temperature of the second resin are higher than a flow temperature of a resin forming the resin particles.

## Patentansprüche

1. Verbundmaterial, umfassend:
einen Rahmenabschnitt, der ein erstes Harz enthält;
eine Vielzahl von Hohlräumen; und
eine erste Schicht und eine zweite Schicht, die jeweils entlang eines Umfangs einer jeden Vielzahl von Hohlräumen angeordnet sind, wobei
die erste Schicht eine Vielzahl von anorganischen Teilchen enthält und
die zweite Schicht mindestens ein Harz enthält, das ausgewählt ist aus der Gruppe bestehend aus dem ersten Harz und einem zweiten Harz, das sich vom ersten Harz unterscheidet, die erste Schicht von einer weiter entfernten Seite der ersten Schicht bedeckt und dem Hohlraum zugewandt ist, wobei die weiter entfernte Seite weiter vom Rahmenabschnitt entfernt ist.

2. Verbundmaterial gemäß Anspruch 1, wobei mindestens ein Harz, das ausgewählt ist aus der Gruppe bestehend aus dem ersten Harz und dem zweiten Harz, ein vernetztes Polymer enthält.

3. Verbundmaterial gemäß Anspruch 1 oder 2, wobei die zweite Schicht eine geringere Menge an anorganischen Teilchen enthält als die erste Schicht.

4. Verbundmaterial gemäß mindestens einem der Ansprüche 1 bis 3, wobei die zweite Schicht das zweite Harz enthält.

5. Verbundmaterial gemäß mindestens einem der Ansprüche 1 bis 4, wobei der Rahmenabschnitt frei von den anorganischen Teilchen ist oder eine geringere Menge der anorganischen Teilchen enthält als die erste Schicht.

6. Verbundmaterial gemäß mindestens einem der Ansprüche 1 bis 5, wobei die zweite Schicht eine mittlere Dicke von 0,01 µm bis 100 µm aufweist.

7. Verbundmaterial gemäß mindestens einem der Ansprüche 1 bis 6, wobei mindestens zwei der Hohlräume so angeordnet sind, dass die ersten Schichten miteinander verbunden sind.

8. Verbundmaterial gemäß mindestens einem der Ansprüche 1 bis 7, wobei aus der Vielzahl von anorganischen Teilchen ein Wärmeübertragungsweg gebildet ist.

9. Verbundmaterial gemäß mindestens einem der Ansprüche 1 bis 8, wobei die Vielzahl von Hohlräumen ähnliche Außenformen aufweisen.

10. Verfahren zur Herstellung eines Verbundmaterials, umfassend: einen Rahmenabschnitt, der ein erstes Harz enthält; und eine Vielzahl von Hohlräumen, wobei das Verfahren in der folgenden Reihenfolge umfasst:
Einfüllen eines Fluids in einen Spalt in einem Teilchenaggregat, das eine Vielzahl von Harzteilchen enthält, wobei das Fluid das erste Harz oder einen Vorläufer des ersten Harzes enthält, und
Bilden der Vielzahl von Hohlräumen durch Schrumpfen oder Entfernen der Vielzahl von Harzteilchen mittels Erwärmens der Vielzahl von Harzteilchen, wobei
eine erste Schicht und eine zweite Schicht auf jeder der Oberflächen der Vielzahl von Harzteilchen vorhanden sind,
wobei die erste Schicht und die zweite Schicht so angeordnet sind, dass sich die zweite Schicht zwischen der Oberfläche und der ersten Schicht befindet und die Oberfläche und die zweite Schicht miteinander in Kontakt stehen,
wobei die erste Schicht eine Vielzahl von anorganischen Teilchen enthält und
wobei die zweite Schicht mindestens ein Harz umfasst, das ausgewählt ist aus der Gruppe bestehend aus dem ersten Harz und einem zweiten Harz, das sich von dem ersten Harz unterscheidet.

11. Verfahren gemäß Anspruch 10, wobei mindestens ein Harz, das ausgewählt ist aus der Gruppe bestehend aus dem ersten Harz und dem zweiten Harz, ein vernetztes Polymer umfasst.

12. Verfahren gemäß Anspruch 10 oder 11, wobei eine Fließtemperatur des ersten Harzes und, falls die zweite Schicht das zweite Harz enthält, eine Fließtemperatur des zweiten Harzes höher sind als eine Fließtemperatur eines Harzes, das die Harzteilchen bildet.

## Revendications

1. Matériau composite comprenant :
une partie squelette incluant une première résine ;
une pluralité de vides ; et
une première couche et une seconde couche chacune placée le long d'une périphérie de chacun de la pluralité de vides, dans lesquelles
la première couche inclut une pluralité de particules inorganiques, et
la seconde couche inclut au moins une résine sélectionnée parmi le groupe constitué de la première résine et d'une seconde résine différente de la première résine, recouvre la première couche depuis un côté plus éloigné de la première couche, et fait face au vide, le côté plus éloigné étant plus éloigné de la partie squelette.

2. Matériau composite selon la revendication 1, dans lequel au moins une résine sélectionnée parmi le groupe constitué de la première résine et de la seconde résine inclut un polymère réticulé.

3. Matériau composite selon la revendication 1 ou la revendication 2, dans lequel la seconde couche inclut une quantité plus petite de particules inorganiques que la première couche.

4. Matériau composite selon l'une quelconque des revendications 1 à 3, dans lequel la seconde couche inclut la seconde résine.

5. Matériau composite selon l'une quelconque des revendications 1 à 4, dans lequel la partie squelette est exempte de particules inorganiques, ou inclut une quantité plus petite de particules inorganiques que la première couche.

6. Matériau composite selon l'une quelconque des revendications 1 à 5, dans lequel la seconde couche présente une épaisseur moyenne de 0,01 µm à 100 µm.

7. Matériau composite selon l'une quelconque des revendications 1 à 6, dans lequel au moins deux des vides sont placés de sorte que les premières couches sont connectées entre elles.

8. Matériau composite selon l'une quelconque des revendications 1 à 7, dans lequel un chemin de transmission calorifique est formé de la pluralité de particules inorganiques.

9. Matériau composite selon l'une quelconque des revendications 1 à 8, dans lequel la pluralité de vides présentent des formes extérieures similaires.

10. Procédé de fabrication d'un matériau composite comprenant : une partie squelette incluant une première résine ; et une pluralité de vides, le procédé comprenant, dans l'ordre suivant :
la charge d'un fluide dans un espace dans un agrégat de particules incluant une pluralité de particules de résine, le fluide incluant la première résine ou un précurseur de la première résine, et
la formation de la pluralité de vides en rétrécissant ou en retirant la pluralité de particules de résine en chauffant la pluralité de particules de résine, dans laquelle
une première couche et une seconde couche sont présentes sur chacune des surfaces de la pluralité de particules de résine,
la première couche et la seconde couche sont placées de sorte que la seconde couche est entre la surface et la première couche et que la surface et la seconde couche sont en contact l'une avec l'autre,
la première couche inclut une pluralité de particules inorganiques, et
la seconde couche comporte au moins une résine sélectionnée parmi le groupe constitué de la première résine et d'une seconde résine différente de la première résine.

11. Procédé selon la revendication 10, dans lequel au moins une résine sélectionnée parmi le groupe constitué de la première résine et de la seconde résine comporte un polymère réticulé.

12. Procédé selon la revendication 10 ou la revendication 11, dans lequel une température de flux de la première résine et, dans le cas où la seconde couche comporte la seconde résine, une température de flux de la seconde résine sont supérieures à une température de flux d'une résine formant les particules de résine.
